# EUROPÄISCHE PATENTSCHRIFT

(11) **EP 3 204 724 B1**
(45) Veröffentlichungstag und Bekanntmachung des Hinweises auf die Patenterteilung: **11.03.2020**
(21) Anmeldenummer: 15778868.8
(22) Anmeldetag: 06.10.2015
(51) Int. Cl.: G01C 21/34, B60W 20/00, B60W 20/12, B60W 50/00, B60L 15/20, B60L 50/15, B60K 6/48

(54) **VERFAHREN ZUM BETRIEB EINES NAVIGATIONSSYSTEMS EINES HYBRIDKRAFTFAHRZEUGS UND HYBRIDKRAFTFAHRZEUG**
METHOD FOR OPERATING A NAVIGATION SYSTEM OF A HYBRID MOTOR VEHICLE, AND HYBRID MOTOR VEHICLE
PROCÉDÉ DE FONCTIONNEMENT D'UN SYSTÈME DE NAVIGATION DE VÉHICULE HYBRIDE ET VÉHICULE HYBRIDE

(30) Priorität: 07.10.2014 DE 102014014851
(43) Veröffentlichungstag der Anmeldung: 16.08.2017
(73) Patentinhaber: Audi AG, 85045 Ingolstadt (DE)
(72) Erfinder: BLASINSKI, Boris, 85080 Gaimersheim (DE); KAISER, Matthias, 85055 Ingolstadt (DE)
(74) Vertreter: Bauer, Dominik Michael
(86) Internationale Anmeldenummer: PCT/EP2015/001961
(87) Internationale Veröffentlichungsnummer: WO 2016/055156

(56) Entgegenhaltungen:
- EP-A1- 1 842 758
- DE-A1-102012 000 139
- DE-T5-112007 000 515
- US-A1- 2010 145 609
- US-A1- 2011 309 926

## Beschreibung

Die Erfindung betrifft ein Verfahren zum Betrieb eines Navigationssystems eines Hybridkraftfahrzeugs mit einem Verbrennungsmotor und einem Elektromotor, der von einer zugeordneten Batterie gespeist wird. Daneben betrifft die Erfindung ein Hybridkraftfahrzeug.

Hybridkraftfahrzeuge sind im Stand der Technik bereits bekannt und nutzen zwei unterschiedliche Antriebsmotoren, die unterschiedliche Antriebskonzepte realisieren. Dabei wird üblicherweise wie von gängigen Kraftfahrzeugen bekannt zum einen ein Verbrennungsmotor verwendet, der die Antriebsleistung durch Verbrennung von Treibstoff aus einem Tank erzeugt. Neben dem Verbrennungsmotor ist im Hybridantriebsstrang auch ein Elektromotor vorgesehen, der üblicherweise auch im generatorischen Betrieb arbeiten kann und von einer Batterie, üblicherweise einer Hochspannungsbatterie, gespeist wird. Durch den generatorischen Betrieb des Elektromotors ist auch ein Laden der Batterie möglich, beispielsweise durch Rekuperation während eines Bremsvorgangs und/oder durch Abzweigung eines Teils der durch den Verbrennungsmotor zur Verfügung gestellten Leistung. Bekannt sind zudem auch sogenannte Plug-in-Hybriden, bei denen eine Ladeeinrichtung vorgesehen ist, über die die Batterie auch bei abgestelltem Kraftfahrzeug aus einem elektrischen Netz oder dergleichen aufgeladen werden kann.

Navigationssysteme sind im Hinblick auf Kraftfahrzeuge ebenso bereits seit längerer Zeit bekannt. Sie dienen dazu, einen Fahrer durch entsprechende Fahranweisungen von einer aktuellen Position zu einem Zielort zu führen, mithin zur Zielführung. Dabei wird eine Route berechnet, die das Kraftfahrzeug zum Zielort führt. Um die optimale Route zum Zielort zu berechnen, wird üblicherweise eine Kostenfunktion verwendet, über die einzelne Routenabschnitte, insbesondere Straßensegmente einer digitalen Karte, bewertet werden können, so dass es beispielsweise möglich ist, das Auffinden der optimalen Route als eine gerichtete Baumsuche zu realisieren. Die Kostenfunktion bestimmt mithin, welche Optimierungsziele betrachtet werden, wobei üblicherweise mehrere Optimierungsziele unterschiedlich gewichtet in die Kostenfunktion aufgenommen werden. Moderne Navigationssysteme weisen daher häufig verschiedene Modi auf, die letztlich bestimmen, auf welches Optimierungsziel der Fahrer am meisten Wert legt. In einem Modus "schnellste Route" wird beispielsweise die optimale Route ermittelt, über die der Fahrer des Kraftfahrzeugs seinen Zielort am schnellsten erreicht. Ein analoger Modus existiert für eine "kürzeste Route"; zudem wurden kürzlich auch Modi bekannt, die eine effizienteste Route, insbesondere im Hinblick auf den Verbrauch des Kraftfahrzeugs und/oder dessen Schadstoffausstoß, ermitteln. Dabei wird üblicherweise ein Fahrzeugmodell verwendet, welches beispielsweise Informationen über den Verbrauch, die Masse des Kraftfahrzeugs und dergleichen enthält, so dass beispielsweise als Effizienzroute eine Route geringsten Verbrauchs angesetzt werden kann, wobei selbstverständlich auch andere Effizienzkriterien, beispielsweise ein möglichst geringer Schadstoffausstoß,angesetzt werden können.

Wurde eine zu fahrende Route bestimmt, wird diese, insbesondere bei Hybridkraftfahrzeugen, üblicherweise auch dem die Komponenten des Antriebsstrangs ansteuernden Antriebssteuergerät übermittelt, welches die bekannte zukünftige Route nutzt, um eine geeignete Betriebsstrategie prädiktiv zu planen und zu optimieren, indem insbesondere prädiktive Verbräuche auf der ausgewählten Route bestimmt werden.

Problematisch dabei ist, dass zum einen die Navigationssysteme bei der Ermittlung der optimalen Route auf einen für alle Kraftfahrzeuge gleichen Eingangsdatensatz, insbesondere hinsichtlich des erwähnten Fahrzeugmodells, zurückgreifen. Besonderheiten bestimmter Kraftfahrzeuge werden so nicht berücksichtigt. Ferner wird weder bei der Ermittlung der optimalen Route noch bei der Zielführung der aktuelle Zustand des Hybridkraftfahrzeugs, insbesondere des Antriebsstrangs, beachtet. Nachdem sich die Eigenschaften des Antriebsstrangs, insbesondere hinsichtlich des Verbrauchs, dynamisch verändern können, ist insbesondere im Hinblick auf Effizienzrouten nicht sichergestellt, dass immer die ideale Lösung gefunden wird. Insbesondere lassen sich Möglichkeiten zum Laden der Batterie bei Hybridkraftfahrzeugen meist schlecht vorausplanen oder finden keinerlei Eingang in die Ermittlung der Effizienzroute.

DE 10 2012 000 139 A1 offenbart ein Navigationssystem und ein Verfahren zum Verwenden von Fahrzeugzustandsinformationen für die Streckenmodellierung. Dabei werden Fahrzeugzustandsinformationen einschließlich eines aktuellen Antriebsstrangzustands und eines Ladezustands eines Energiespeichersystems genutzt, um ein Kostenmodell für die Erzeugung einer Eco-Fahrtstrecke auszuwählen.

EP 1 842 758 A1 betrifft die Routenbestimmung für ein Hybridfahrzeug. Dabei soll ein Ladezustand einer Batterie berücksichtigt werden, um die Nutzung von Antriebsmitteln entlang einer Route gemeinsam mit der Route derart zu bestimmen, dass beispielsweise der Kraftstoffverbrauch minimiert wird. Es kann eine Vorhersage von Ladungszuständen erfolgen und der tatsächliche Wert hiermit verglichen werden.

Der Erfindung liegt daher die Aufgabe zugrunde, eine verbesserte Ermittlung von Effizienzrouten für Hybridkraftfahrzeuge, insbesondere Plug-in-Hybridkraftfahrzeuge, anzugeben.

Zur Lösung dieser Aufgabe ist erfindungsgemäß ein Verfahren mit den Merkmalen des Anspruchs 1 vorgesehen.

Erfindungsgemäß wird also vorgeschlagen, den aktuellen Betriebszustand des Kraftfahrzeugs, insbesondere des Hybridantriebsstrangs, zu beachten, indem eine geeignete Rückmeldungsmöglichkeit vom Antriebssteuergerät zu dem Navigationssteuergerät des Navigationssystems zur Verfügung gestellt wird, beispielsweise ein entsprechender Kommunikationskanal, der über ein Bussystem des Kraftfahrzeugs realisiert werden kann. Auf diese Weise wird im Navigationssystem zur Berechnung der optimalen Effizienzroute nicht nur die Antriebsvariante, hier das Vorliegen eines Hybridantriebsstrangs, berücksichtigt, sondern auch dessen aktuelle Eigenschaften beziehungsweise die Auswirkungen auf den zukünftigen Betrieb (aktuelle Betriebsvorhersage). Auf diese Weise können seitens des Navigationssystems deutlich verbessert allgemeine und aktuelle Eigenschaften des Antriebsstrangs berücksichtigt werden, um es zu ermöglichen, den (relativen oder absoluten) Anteil des rein elektrischen Fahrens, also des Fahrens allein mit dem Elektromotor, tatsächlich zu maximieren, wobei auch auf Änderungen während der Zielführung, beispielsweise Änderungen in einer Betriebsvorhersage aufgrund nun vorliegender genauerer Daten, besser reagiert werden kann.

Dem liegt die Erkenntnis zugrunde, dass Kunden, die sich für ein Hybridkraftfahrzeug, insbesondere einen Plug-in-Hybriden, entscheiden, dies häufig im Hinblick auf ein maximales Fahrerlebnis hinsichtlich des elektrischen Fahrens tun, mithin den Anteil rein elektrischen Fahrens maximieren möchten und idealerweise die gesamte Route elektrisch fahrbar zurückzulegen wollen. Eine optimale Effizienzroute in der Hinsicht, einen maximalen Anteil des rein elektrischen Fahrens zu erzielen, lässt sich aber besonders vorteilhaft genau dann ideal umsetzen, wenn immer die aktuellsten Informationen über den Zustand und die Betriebsplanung des Hybridantriebsstrangs vorliegen.

Auf diese Weise wird nicht nur das elektrische Fahrerlebnis gesteigert, sondern es kann im Übrigen auch der Kohlendioxid-Ausstoß beziehungsweise auch der Ausstoß sonstiger Schadstoffe im Fahrbetrieb gesenkt werden. Mithin bietet die vorliegende Erfindung die Möglichkeit, das Navigationssystem mit dem Antriebssteuergerät derart zu koppeln, dass eine verbesserte Routenberechnung und Zielführung möglich ist, insbesondere im Hinblick auf ein maximales, rein elektrisches Fahren.

Die allgemeinen Vorteile eines Betriebsmodus des Navigationssystems, in dem eine Effizienzroute, in der ein maximaler Anteil des Fahrens allein mit dem Elektromotor realisiert ist, unter Berücksichtigung von Eigenschaften des Hybridantriebsstrangs ermittelt wird, seien im Folgenden anhand von Beispielen kurz näher erläutert. Soll beispielsweise eine Strecke vom Flughafen in München bis zur Innenstadt mit einem Plug-in-Hybridkraftfahrzeug zurückgelegt werden, würde eine gängige Optimierung auf eine schnellste Route zu einer Fahrtstrecke von 40 km führen, die in 30 Minuten zurückgelegt wird, bei der jedoch ein reines Fahren nur mit dem Elektromotor nicht möglich ist, sondern der Verbrennungsmotor auf der Autobahn wegen hoher Fahrleistungen gezündet werden muss und die Batterieladung nicht für die gesamte Strecke reicht. Gegebenenfalls sind im Stadtverkehr sogar Starts des Verbrennungsmotors notwendig, um die Batterie wieder aufzuladen. Beispielsweise kann bei dieser schnellsten Route nur zu 75 % emissionsfrei mit dem Elektromotor gefahren werden, während auf 25 % der Strecke der Verbrennungsmotor betrieben werden muss. In einer modifizierten Ermittlung, in der die Kostenfunktion unter Berücksichtigung der Eigenschaften des Hybridantriebsstrangs, vorliegend also der aktuellen Effizienzinformation, auf ein maximales Fahren allein mit dem Elektromotor abzielt, wird eine Effizienzroute aufgefunden, bei der für eine Strecke von 38 km eine Fahrtzeit von 33 Minuten benötigt wird, jedoch über die gesamte Strecke ein reines Fahren nur mit dem Elektromotor ermöglicht wird, mithin ein maximales elektrisches Fahrgefühl seitens des Fahrers ermöglicht wird und 100 % der Strecke emissionsfrei gefahren wird.

Ein zweites Beispiel bezieht sich auf den Innenstadtverkehr, wenn die Batterie vollständig entladen ist. Würde auf bekannte Weise eine schnellste Route ermittelt, käme ein reines Fahren mit dem Elektromotor nicht in Frage, da ein Laden der Batterie durch den Verbrennungsmotor im innerstädtischen Stopand-Go-Verkehr nur äußerst eingeschränkt und ineffizient möglich ist. Wird die Route jedoch nur leicht modifiziert, ist zwar selbstverständlich noch immer kein Fahren allein mit dem Elektromotor über die gesamte Strecke möglich, aber es können beispielsweise gezielt durch das Nutzen von Hauptstraßen/Autostraßen, beispielsweise Ringstraßen, Routenabschnitte gewählt werden, auf denen ein Laden der Batterie durch den Verbrennungsmotor effizient möglich ist. Dann kann die auf diese Weise in der Batterie eingespeicherte Energie auf dem letzten innerstädtischen Teilstück der Effizienzroute für das reine elektrische Fahren eingesetzt werden, mithin ein elektrischer Fahranteil von beispielsweise 20 % gegenüber 0 % zuvor erzielt werden. Dieses Beispiel macht besonders deutlich, wie stark sich die Berücksichtigung der Möglichkeit des Ladens der Batterie aus dem Elektromotor, wie es bei Hybridkraftfahrzeugen möglich ist, positiv auf die Ermittlung möglichst effizienter, optimaler Routen auswirkt.

Mithin sieht eine besonders vorteilhafte Ausgestaltung der vorliegenden Erfindung auch vor, dass wenigstens eine auf einen Ladevorgang der Batterie durch den Verbrennungsmotor bezogene Effizienzinformation verwendet wird. Denn die Möglichkeit, die Batterie aus dem Verbrennungsmotor zu laden, existiert nur bei Hybridkraftfahrzeugen in Hybridantriebssträngen und wirkt auf den ersten Blick nicht sonderlich effizient. Jedoch haben Untersuchungen gezeigt, dass es durchaus zweckmäßig sein kann, bei bestimmten Routenverläufen Ladephasen auf Routenabschnitten vorzusehen, die die Gesamteffizienz der Route erhöhen, und dies nicht unbedingt nur im Hinblick auf ein maximales Fahrerlebnis allein mit dem Elektromotor. Dem Navigationssystem können bereits als grundsätzliche Eingangsparameter Effizienzparameter zur Verfügung gestellt werden, die die Möglichkeit des Ladens der Batterie und dessen Effizienz beschreiben; möglich ist es aber auch, worauf noch näher eingegangen werden wird, während der Zielführung dynamisch zu reagieren, wenn beispielsweise der Verbrauch auf vergangenen Routenabschnitten höher war als prädiziert beziehungsweise bei der Ermittlung der Effizienzroute berechnet, so dass eine Anpassung der Effizienzroute für die Zukunft unter Einfügung eines Ladeabschnitts zweckmäßig sein kann und dergleichen. Mithin zeigt die Möglichkeit des Ladens der Batterie aus dem Verbrennungsmotor besonders deutlich eine Flexibilität im Hybridantriebsstrang auf, die bislang bei der Routenplanung in Navigationssystemen noch nicht hinreichend berücksichtigt wurde und durch die Effizienzinformation Eingang in eine verbesserte Ermittlung einer Effizienzroute finden kann.

In einer ersten Ausführungsform des erfindungsgemäßen Verfahrens kann vorgesehen sein, dass als Effizienzinformation ein bei der Ermittlung der Effizienzroute zu berücksichtigender, positive und negative Verbräuche des Verbrennungsmotors und des Elektromotors und/oder Anforderungen an die Streckenplanung beschreibende Effizienzparameter enthaltender Effizienzparametersatz verwendet wird, der seitens des Antriebssteuergeräts wenigstens bei einer Änderung eines Effizienzparameters aufgrund des aktuellen Betriebszustands und/oder der aktuellen Betriebsvorhersage aktualisiert und dem Navigationssystem bereitgestellt wird. Auf diese Weise soll sichergestellt werden, dass bei der Ermittlung von Effizienzrouten, sei es bei der ursprünglichen Planung oder bei einer dynamischen Anpassung stets die aktuellsten Eigenschaften des Hybridantriebsstrangs, beschrieben durch die Effizienzparameter, zur Verfügung stehen. Denn Verbrauchseigenschaften und sonstige Effizienzparameter können durchaus vom Betriebszustand abhängig sein, nachdem beispielsweise eine Abhängigkeit davon besteht, wie lange der jeweilige Motor schon läuft und/oder was für eine Außentemperatur herrscht. Auch sonstige Effekte, beispielsweise ein nötiger Start des Verbrennungsmotors, um eine Resteverbrennung oder dergleichen zu ermöglichen, können über die Effizienzparameter abgebildet werden.

Dabei sieht eine besonders zweckmäßige Ausgestaltung vor, dass als Effizienzparameter die mit dem aktuellen Energieinhalt der Batterie bei Nutzung nur des Elektromotors zurücklegbare Strecke, aufgeschlüsselt nach Straßenklasse, und/oder die durch Laden der Batterie mittels des Verbrennungsmotors pro Streckeneinheit zusätzlich gewinnbare Strecke, aufgeschlüsselt nach Straßenklasse, und/oder präferierte Routenabschnitte, insbesondere bezüglich deren Länge und Eigenschaften, beschreibende Effizienzparameter verwendet werden. Als Straßenklassen können dabei beispielsweise Stadtverkehr, Landstraßen und Autobahnen unterschieden werden, denen meist entsprechende Verbrauchs-/Effizienzinformationen zuordenbar sind. Der Effizienzparametersatz kann als eine Art Grundlage bezeichnet werden, die insbesondere auch bei der ersten Ermittlung einer Effizienzroute zur Verfügung stehen sollte, das bedeutet, bevor es aufgrund einer bekannten Effizienzroute beispielsweise seitens des Antriebssteuergeräts möglich war, eine prädiktive Betriebsstrategie zu ermitteln oder dergleichen, mithin bevor nähere Informationen über aktuelle Betriebszustände während der Zielführung und/oder prädizierte Betriebszustände auf der Effizienzroute vorliegen können. Selbstverständlich werden die Effizienzparameter auch bei den weiteren Berechnungen, beispielsweise bei einer Anpassung der Effizienzroute, welche durch Änderungen in der Verkehrslage ausgelöst werden kann, weiter berücksichtigt, wobei sie, wie beschrieben wurde, immer aktuell gehalten werden. Treten also, insbesondere auch einen Schwellwert überschreitende, Änderungen diesbezüglich auf, werden aktualisierte Effizienzparameter entsprechend dem Navigationssystem bereitgestellt, also insbesondere vom Antriebssteuergerät an das Navigationssteuergerät übertragen.

Routenabschnitte beschreibende Effizienzparameter können sich dabei besonders bevorzugt auf einen zu Beginn der Effizienzroute liegenden Routenabschnitt beziehen, insbesondere was eine Aufwärmphase angeht. Letztlich geht es bei diesen Effizienzparametern also um vom Antriebssteuergerät präferierte Routenabschnitte, so dass sie beispielsweise angeben können, dass es innerhalb der ersten fünf Kilometer gewünscht ist, wenigstens einen Routenabschnitt von 1 km Länge aufzufinden, der kreuzungs- und ampelfrei ist. Auf diese Weise ist ein besonders effizientes und vorteilhaftes Aufwärmen des Verbrennungsmotors und/oder des Elektromotors möglich.

In einer speziellen Ausführungsform können dem Navigationssteuergerät des Navigationssystems also bereits vor der ersten Berechnung der Effizienzroute als essentielle Informationen in Form des Effizienzparametersatzes folgende Effizienzparameter zur Verfügung gestellt werden: Die mit dem aktuellen Energieinhalt in der Batterie zurücklegbare rein elektrische Fahrtstrecke nach Straßentyp, beispielsweise 10 km im Stadtverkehr, 20 km auf der Landstraße und 5 km auf der Autobahn; die zusätzlich mit dem Elektromotor allein zurücklegbare Strecke, die durch Laden der Batterie mit dem Verbrennungsmotor erzeugt werden könnte, beispielsweise 0 Meter Strecke pro Kilometer Stadtverkehr, 100 Meter Strecke pro Kilometer Landstraße und 50 Meter Strecke pro Kilometer Autobahn. Als dritte Gruppe von Effizienzparametern sind Angaben zur Aufwärmphase enthalten, beispielsweise der Wunsch nach einem 1 Kilometer langen Routenabschnitt ohne Kreuzungen und Ampeln. Während des weiteren Betriebs des Navigationssystems werden die Effizienzparameter im Navigationssteuergerät ständig aktuell gehalten, so dass Neuberechnungen der Effizienzroute immer auch auf den aktuellen Zustands- und Prädiktionsdaten beruhen. Es sei noch darauf hingewiesen, dass bei der Einteilung im Straßenklassen zweckmäßigerweise eine auch in digitalem Kartenmaterial des Navigationssystems verwendete Einteilung in Straßenklassen (Straßentypen) verwendet wird.

Die Erfindung sieht vor, dass seitens des Antriebssteuergeräts eine prädiktive Betriebsstrategie für eine von dem Navigationssystem bereitgestellte Effizienzroute, insbesondere in Abhängigkeit von dem aktuellen Betriebszustand, ermittelt wird, wobei wenigstens eine der wenigstens einen Effizienzinformation in Abhängigkeit von der prädiktiven Betriebsstrategie ermittelt wird. Das bedeutet, als die bereits genannte Betriebsvorhersage kann die aktuelle prädiktive Betriebsstrategie, die im Antriebssteuergerät der bekannten Effizienzroute ermittelt wurde, genutzt werden, was es insbesondere mit besonderem Vorteil ermöglicht, seitens des Antriebssteuergeräts Rückmeldungen an das Navigationssystem zur Verfügung zu stellen, insbesondere was die Umsetzbarkeit und/oder Verbesserungspotential zu der aktuellen Effizienzroute angeht.

So sieht eine besonders vorteilhafte Weiterbildung vor, dass bei einer, insbesondere auf Grundlage der aktuellen prädiktiven Betriebsstrategie, nicht vollständig elektrisch fahrbaren, bereitgestellten Effizienzroute durch eine Routenanalyse in Abhängigkeit von der prädiktiven Betriebsstrategie eine wenigstens einen Ansatzpunkt zur Erhöhung des allein mit dem Elektromotor fahrbaren Anteils enthaltende Anpassungswunschinformation als Effizienzinformation ermittelt und an das Navigationssystem bereitgestellt wird. Mit anderen Worten bedeutet dies, dass es bei Empfang einer Effizienzroute und insbesondere auch während einer laufenden Zielführung möglich ist, seitens des Antriebssteuergeräts an das Navigationssystem zu melden, dass die aktuelle Effizienzroute an wenigstens einer Stelle für den Hybridantriebsstrang nicht optimal ist, so dass das Navigationssystem bei dynamischen Neuberechnungen, insbesondere aufgrund der Verkehrslage oder auf direkte Aufforderung durch das Antriebssteuergerät, eine optimalere Effizienzroute berechnen kann. Dabei kann konkret vorgesehen sein, dass der Ansatzpunkt eine Verlängerung und/oder Hinzufügung eines zum Laden der Batterie aus dem Elektromotor geeigneten Routenabschnitts und/oder eine Verkürzung und/oder den Wegfall eines nicht bei reinem Betrieb des Elektromotors fahrbaren Routenabschnitts betrifft. Wird im Antriebssteuergerät beispielsweise festgestellt, dass bei der aktuellen Routenführung die in der Batterie vorliegende Energie nicht mehr ausreichend ist, um beispielsweise bei einem abschließenden Fahren im Stadtverkehr das Ziel durch rein elektrisches Fahren zu erreichen, beispielsweise, nachdem sich der Betriebszustand geändert hat und/oder Verbräuche in der Vergangenheit höher als angenommen waren, und erkennt das Antriebssteuergerät zugleich, dass ohnehin ein zum Laden vorgesehener Autobahn- oder Landstraßenabschnitt vorlag, kann es vorschlagen, um mehr Energie in der Batterie zu erhalten, ein Abfahren von der Autobahn beziehungsweise Ländstraße um eine Ausfahrt zu verschieben. Ein derartiger Ansatzpunkt kann dann vom Antriebssteuergerät überprüft werden, so dass sich gegebenenfalls eine Route mit verlängertem Autobahn- beziehungsweise Landstraßenabschnitt ergibt, die dann aber mit höherem Anteil (relativ oder absolut) elektrisch gefahren werden kann. Selbstverständlich ist es auch denkbar, dass festgestellt wird, dass eine sehr große Menge an Energie in der Batterie vorliegt, mithin eine frühere Ausfahrt von einer Autobahn genommen werden kann und dergleichen. Ersichtlich können im Rahmen der Ermittlung und Bewertung der prädiktiven Betriebsstrategie in verschiedenen Situationen Ansatzpunkte aufgefunden werden, die auf eine mögliche Optimierung der Effizienzroute hinweisen können. Diese werden dann entsprechend dem Navigationssteuergerät des Navigationssystems zur Verfügung gestellt.

Wie bereits angedeutet, kann vorgesehen sein, dass das Navigationssystem bei Empfang einer Anpassungswunschinformation unmittelbar eine Neuberechnung der Effizienzroute unter Berücksichtigung der Anpassungswunschinformation beginnt oder die Anpassungswunschinformation bei einer anderweitig ausgelösten Neuberechnung der Effizienzroute berücksichtigt, wobei eine unter Berücksichtigung der Anpassungswunschinformation ermittelte Effizienzroute dann verwendet wird, wenn sie im Vergleich zu einer ohne Berücksichtigung der Anpassungswunschinformation ermittelten Route zu einem größeren Anteil allein unter Verwendung des Elektromotors gefahren werden kann. Mithin kann vorgesehen sein, festzustellen, ob eine unter Berücksichtigung der Ansatzpunkte ermittelte Effizienzroute als optimaler bewertet wird als eine sonstige Effizienzroute, beispielsweise die vorherige Effizienzroute, nachdem unter Berücksichtigung der Ansatzpunkte der Anpassungswunschinformation die neuberechnete Effizienzroute ermittelt wurde. Dies kann durch den Empfang der Anpassungswunschinformation selbst ausgelöst sein, es ist jedoch auch denkbar, diese Anpassungswunschinformation erst bei einer aus anderem Grund angestoßenen Neuberechnung, beispielsweise bei einer veränderten Verkehrslage, zu berücksichtigen. Dabei sei angemerkt, dass selbstverständlich bei dem beschriebenen Vergleich der Effizienzrouten mit oder ohne Berücksichtigung des Ansatzpunktes auch weitere Kriterien, die sich auf den Komfort beziehen, berücksichtigt werden können, beispielsweise im Hinblick auf eine ohnehin eingesetzte, gegebenenfalls modifizierte Kostenfunktion, das bedeutet, eine hinsichtlich einer Anpassungswunschinformation modifizierte Effizienzroute kann, trotzdem sie nun vollständig rein elektrisch gefahren werden kann, unerwünscht sein, wenn sie beispielsweise die doppelte Zeit in Anspruch nimmt oder dergleichen. Mithin sieht eine zweckmäßige Weiterbildung vor, dass die unter Berücksichtigung der Anpassungswunschinformation ermittelte, von der ohne Berücksichtigung der Anpassungswunschinformation ermittelte Effizienzroute abweichende Effizienzroute vor Verwendung gegen wenigstens ein insbesondere ebenso beide Effizienzrouten vergleichendes Komfortkriterium geprüft wird. Auf diese Weise werden zu große Umwege beziehungsweise zu lange Fahrten vermieden, die seitens des Fahrers auch unerwünscht sein können.

Dabei sei an dieser Stelle noch angemerkt, dass zur Berücksichtigung der in der Anpassungswunschinformation enthaltenen Ansatzpunkte beispielsweise vorgesehen sein kann, Randbedingungen bei der Ermittlung der Effizienzroute anzupassen und dergleichen. Beispielsweise kann zwangsläufig gefordert werden, erst bei einer späteren Ausfahrt von der Autobahn abzufahren und dergleichen. Entsprechende Modifikationen bei der Ermittlung von optimalen Routen, insbesondere Effizienzrouten, sind grundsätzlich bereits bekannt und müssen daher hier nicht näher dargelegt werden.

Neben dem Verfahren betrifft die Erfindung auch ein Hybridkraftfahrzeug, aufweisend einen Hybridantriebsstrang mit einem Elektromotor und einem Verbrennungsmotor, eine Batterie zur Speisung des Elektromotors, ein Navigationssystem mit einem Navigationssteuergerät und ein Antriebssteuergerät, welche Steuergeräte zur Ausführung des erfindungsgemäßen Verfahrens ausgebildet sind. Sämtliche Ausführungen bezüglich des erfindungsgemäßen Verfahrens lassen sich analog auf das erfindungsgemäße Kraftfahrzeug übertragen, mit welchem mithin die bereits genannten Vorteile erhalten werden können. Insbesondere ermöglicht es also auch das erfindungsgemäße Kraftfahrzeug, die Routenplanung durch Verwendung aktueller Effizienzinformationen des Antriebssteuergeräts zu verbessern und seitens des Antriebssteuergeräts eine Rückmeldung, insbesondere aufgrund einer prädiktiven Betriebsstrategie, hinsichtlich der Effizienzroute zu geben.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Skizze zur Ermittlung einer Effizienzroute,
- Fig. 2: eine Skizze hinsichtlich eines auftretenden Anpassungswunsches,
- Fig. 3: einen Ablaufplan eines Ausführungsbeispiels des erfindungsgemäßen Verfahrens, und
- Fig. 4: ein erfindungsgemäßes Kraftfahrzeug.

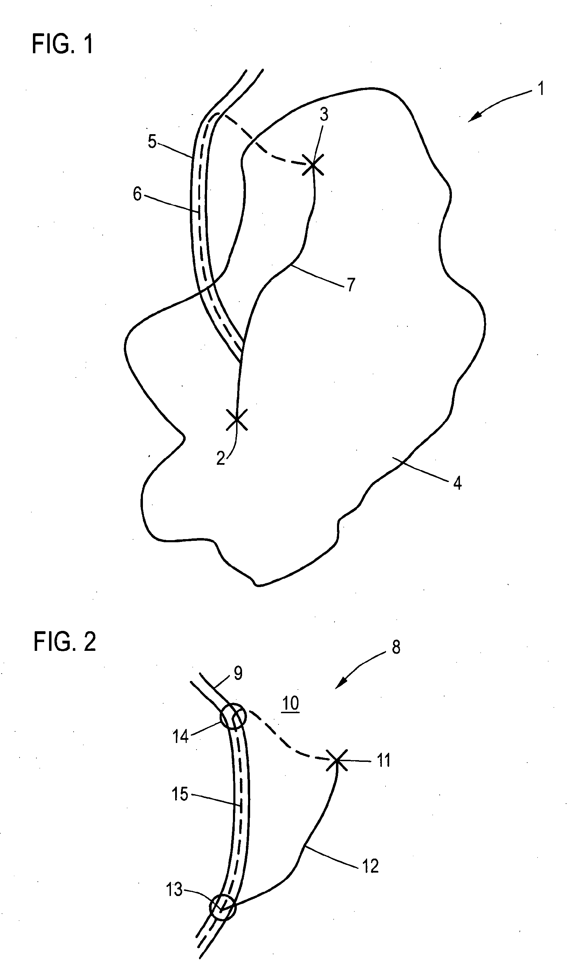

Im erfindungsgemäßen Verfahren geht es um die Ermittlung und Aktualisierung einer eine maximale Nutzung des Elektromotors ermöglichenden Effizienzroute von einer aktuellen Position eines Hybridkraftfahrzeugs zu einem Zielort, die insbesondere auch dynamisch angepasst werden kann. Die Ermittlung und dynamische Anpassung der Effizienzroute beruht dabei auf vom Antriebssteuergerät des Kraftfahrzeugs, welches die Komponenten des Hybridantriebsstrangs mit dem Elektromotor und dem Verbrennungsmotor steuert, an das Navigationssteuergerät des Navigationssystems übermittelten Effizienzinformationen, die vom aktuellen Betriebszustand, insbesondere des Hybridantriebsstrangs, und, falls vorliegend, von einer aktuellen Betriebsvorhersage abhängig sind. Das Konzept der Effizienzroute im allgemeinen sei zunächst im Hinblick auf Fig. 1 näher erläutert, die einen stark vereinfachten Kartenausschnitt 1 zeigt, der die Möglichkeiten, von einer aktuellen Position 2 des Kraftfahrzeugs zu einem Zielort 3 zu gelangen, illustriert. Der Bereich 4 deutet dabei einen Anteil des Straßennetzes an, der als Stadtverkehr klassifiziert ist. Ferner ist ein Autobahnabschnitt 5 zu erkennen. Fig. 1 zeigt nun zwei mögliche Routen 6, 7, um vom aktuellen Ort 2 zum Zielort 3 zu gelangen. Beide Routen 6, 7 verlaufen zu Beginn gleich, wobei jedoch die herkömmlich als schnellste Route ermittelte Route 6 den Autobahnabschnitt 5 nutzt, um schneller an den Zielort 3 zu gelangen. Auf der Autobahn ist es jedoch nicht möglich, das Kraftfahrzeug rein mit dem Elektromotor zu betreiben, so dass die schnellste Route 6 Routenabschnitte enthält, in denen der Verbrennungsmotor des Kraftfahrzeugs benutzt wird.

Die Route 7 wurde mit dem erfindungsgemäßen Verfahren derart ermittelt, dass eine maximale Nutzung des Elektromotors ermöglicht wird, so dass diese Effizienzroute 7 vorliegend aufgrund des Stadtverkehrs im Bereich 4 und einem hinreichenden Ladezustand der Batterie sogar vollständig rein mit dem Elektromotor zurückzulegen ist, mithin das maximale Fahrerlebnis elektrischen Fahrens bietet. Dabei dauert die Fahrt entlang der Effizienzroute 7 nur unwesentlich länger als die Fahrt entlang der schnellsten Route 6. Nachdem die Effizienzroute 7 auch auf Basis aktueller Effizienzinformationen ermittelt wurde, ist sie zudem verlässlich, da nicht nur darauf eingegangen wird, dass ein Hybridantriebsstrang vorliegt, sondern auch, welche Betriebseigenschaften dieser unter den aktuellen Bedingungen aufweist. Insbesondere wird bei der Ermittlung allgemeiner Effizienzrouten dabei auch beachtet, dass es möglich ist, die Batterie während des Fahrens, insbesondere auf Landstraßen- und Autobahnabschnitten, zu laden. Auf diese Weise kann ein neuer Energievorrat in der Batterie geschaffen werden, um einen größeren relativen oder absoluten Anteil zu schaffen, der rein mit dem Elektromotor bewältigt werden kann. Ist eine Effizienzroute, wie beispielsweise die Effizienzroute 7, erst ermittelt, wird sie an das Antriebssteuergerät weitergegeben, wo eine prädiktive Betriebsstrategie, die die Komponenten des Hybridantriebsstrangs optimal ausnutzt, für diese Effizienzroute ermittelt wird. Bereits hierbei, aber auch durch spätere Veränderungen des Betriebszustands, beispielsweise höhere Verbräuche als angenommen oder Temperaturwechsel, kann es dazu kommen, dass seitens des Antriebssteuergeräts Optimierungspotential für die Effizienzroute erkannt wird. Dies sei anhand des Beispiels in Fig. 2 näher dargestellt.

Dort ist wiederum ein stark vereinfachter Kartenausschnitt 8 dargestellt, der einen weiteren Autobahnabschnitt 9 zeigt, der vorliegend vollständig durch einen als Stadtverkehr klassifizierten Bereich 10 führt. Innerhalb des Bereichs 10 liegt auch der in diesem Beispiel betrachtete Zielort 11. Die bislang berechnete Effizienzroute 12 sieht nun vor, an einer Autobahnausfahrt 13 abzufahren und im Stadtverkehr den Zielort 11 zu erreichen.

Wird nun seitens des Antriebssteuergeräts bei seinen Berechnungen, insbesondere im Rahmen der prädiktiven Betriebsstrategie, festgestellt, dass die auf dem Autobahnabschnitten 9 gewonnene Energie beim Laden der Batterie entgegen der ursprünglichen Erwartung nicht ausreichend ist, um den durch den Bereich 10 im Stadtverkehr führenden Abschnitt zu bewältigen, kann eine Rückmeldung mit einem konkreten Anpassungswunsch an das Navigationssteuergerät des Navigationssystems gegeben werden. Im vorliegenden Fall könnte vorgeschlagen werden, den Routenabschnitt entlang des Autobahnabschnitts 9 bis zur nächsten Ausfahrt 14 zu verlängern, vgl. die gestrichelte Route 15, um eine größere Menge an Energie in der Batterie zu erhalten, die es ermöglicht, einen modifizierten Routenabschnitt durch den Stadtverkehr im Bereich 10 ohne weiteres Zuschalten des Verbrennungsmotors zu bewältigen. Entsprechend wird in diesem Fall als Effizienzinformation eine Anpassungswunschinformation an das Navigationssteuergerät übermittelt, welche den Ansatzpunkt erhält, über die Ausfahrt 13 hinaus den Autobahnbetrieb zu verlängern. Das Navigationssteuergerät nutzt diese Anpassungswunschinformation bei einer Neuberechnung der Effizienzroute 12, indem als Randbedingung bis zur Ausfahrt 14 weitergefahren werden soll, so dass nun vollständig die gestrichelte Route 15 bestimmt werden kann. Ermöglicht es diese modifizierte Route 15 als neue Effizienzroute tatsächlich, den Stadtverkehr gänzlich nur mit dem Elektromotor zu fahren und dauert der Umweg nicht deutlich länger, wird die Route 15 als neue Effizienzroute auch bei der Zielführung verwendet; ergibt sich jedoch keine gegenüber der Effizienzroute 12 verbesserte Route 15, wird auf eine Anpassung verzichtet und gegebenenfalls entsprechende Rückmeldung an das Antriebssteuergerät gegeben.

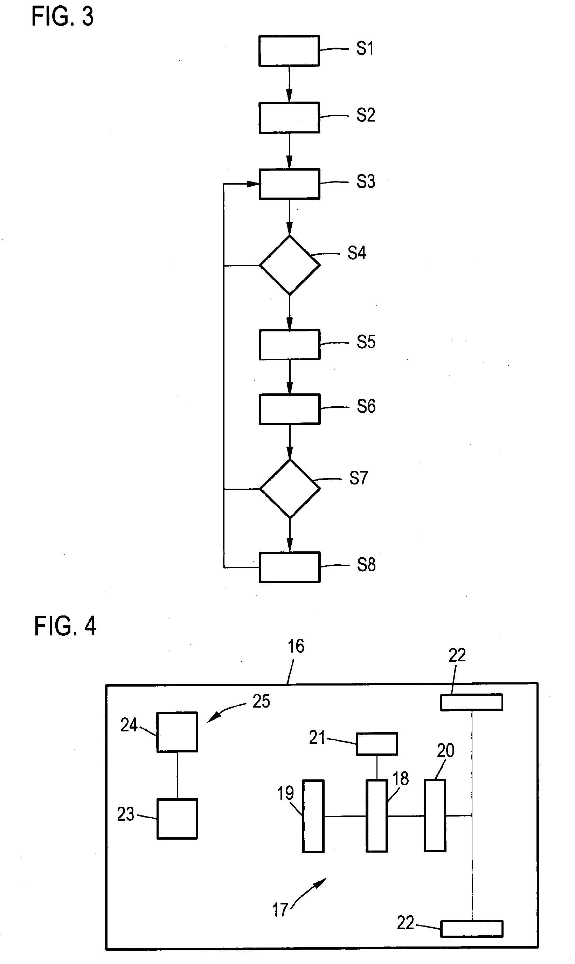

In allgemeinerer Formulierung als die beiden genannten Beispiele zeigt Fig. 3 einen Ablaufplan eines Ausführungsbeispiels des erfindungsgemäßen Verfahrens, wie es durch das Navigationssteuergerät und das Antriebssteuergerät gemeinsam durchgeführt werden kann. Dabei werden in einem Schritt S1 durch das Antriebssteuergerät dem Navigationssteuergerät bereits vor einer ersten Ermittlung einer Effizienzroute Effizienzinformationen in Form eines Effizienzparametersatzes zur Verfügung gestellt, der grundlegende, aktuelle Effizienzparameter enthält, die für die Ermittlung der Effizienzroute von Bedeutung sind. Auch wenn dies in Fig. 3 nicht explizit gezeigt ist, werden diese Effizienzparameter grundsätzlich aktuell gehalten, das bedeutet, bei einer Veränderung werden diese sofort wieder in aktueller Form dem Navigationssteuergerät zur Verfügung gestellt.

Die Effizienzparameter enthalten im vorliegenden Fall die mit dem aktuellen Ladezustand der Batterie zurücklegbare rein elektrische Fahrtstrecke, aufgeschlüsselt nach Straßentyp (Stadtverkehr, Landstraße, Autobahn), die rein elektrische Fahrtstrecke, die zusätzlich durch Laden mit dem Verbrennungsmotor erzeugt werden kann, wiederum aufgeschlüsselt pro Kilometer Straßenklasse, und ferner Effizienzparameter, die Anforderungen beziehungsweise Wünsche an Routenabschnitte in der Aufwärmphase darstellen, beispielsweise entlang der ersten fünf Kilometer möglichst ein Stück von einem Kilometer Länge, das frei von Kreuzungen und Ampeln ist.

Unter Berücksichtigung dieser Effizienzparameter wird in Schritt S2 eine erste Effizienzroute berechnet und wiederum dem Antriebssteuergerät zur Verfügung gestellt. Dieses ermittelt aufgrund der nun vorliegenden Effizienzroute im Schritt S3 eine prädiktive Betriebsstrategie, aus der gegebenenfalls bereits Ansatzpunkte im Rahmen einer Routenanalyse ersichtlich sind, die auf ein Optimierungspotential der Effizienzroute hindeuten, wobei sich, nachdem die prädiktive Betriebsstrategie ebenso ständig aktuell gehalten wird, ein solches Optimierungspotential auch erst im weiteren Verlauf, während der Zielführung, ergeben kann. Mithin wird in einem Schritt S4 überprüft, ob ein solches Optimierungspotential gesehen wird, mithin Ansatzpunkte für eine Verbesserung der Effizienzroute seitens des Antriebssteuergeräts gesehen werden, vgl. hierzu auch die Beschreibung zu Fig. 2. Ist dies der Fall, werden in einem Schritt S5 diese Ansatzpunkte als Anpassungswunschinformation, also eine spezielle Art von Effizienzinformation, an das Navigationssteuergerät übermittelt. Dieses berechnet im Schritt S6 unter Berücksichtigung des wenigstens einen Ansatzpunktes eine neue Effizienzroute, die mit der bisherigen Effizienzroute oder einer ebenso ohne Berücksichtigung des Ansatzpunktes neu bestimmten Effizienzroute dahingehend verglichen wird, ob eine Verbesserung hinsichtlich des maximalen Nutzens des Elektromotors erzielt wird, ohne dabei Komfortkriterien zu verletzen, die sich beispielsweise auf die Fahrtzeit beziehen können. Ist dies nicht der Fall, ist also die alte Effizienzroute noch immer die am besten geeignete, wird eine entsprechende Rückmeldung an das Antriebssteuergerät gegeben, und bei Schritt S3 weiter fortgefahren, wobei selbstverständlich dieser Ansatzpunkt nun nicht mehr oder zumindest für eine vorbestimmte Zeit nicht mehr im Schritt S4 als relevant angesehen wird.

Wurde in Schritt S7 jedoch festgestellt, dass die unter Berücksichtigung des Ansatzpunktes neu ermittelte Effizienzroute günstiger ist, beispielsweise im Beispiel von Fig. 2 also tatsächlich bis zur Ausfahrt 14 weitergefahren werden sollte, wird die neue Effizienzroute zur Zielführung verwendet und im Schritt S8 auch an das Antriebssteuergerät weitergegeben, welches eine neue prädiktive Betriebsstrategie ermittelt und selbstverständlich weiter überwacht, ob Optimierungspotential gegeben ist.

Es sei darauf hingewiesen, dass selbstverständlich auch unabhängig von einer Anpassungswunschinformation des Antriebssteuergeräts eine dynamische Neuberechnung der Effizienzroute seitens des Navigationssteuergeräts erfolgen kann, wobei in diesem Kontext selbstverständlich auch immer die aktuellsten Effizienzparameter und sonstigen Effizienzinformationen berücksichtigt werden. Dies kann beispielsweise auftreten, wenn neue Verkehrslageinformationen und dergleichen erhalten werden, wie dies grundsätzlich bekannt ist. Immer dann, wenn eine neue Effizienzroute zur Zielführung verwendet wird, wird diese selbstverständlich auch dem Antriebssteuergerät zur Verfügung gestellt.

Fig. 4 zeigt schließlich eine Prinzipskizze eines erfindungsgemäßen Kraftfahrzeugs 16. Bei diesem handelt es sich um ein Hybridkraftfahrzeug 16, das bedeutet, es weist einen schematisch dargestellten Hybridantriebsstrang 17 mit einem Elektromotor 18, einem Verbrennungsmotor 19 und einem Getriebe 20 auf. Der Elektromotor 18 wird von einer Batterie 21 gespeist und kann auch in einem generatorischen Betrieb genutzt werden, um die Batterie 21 zu laden, sei es aus an den Rädern 22 beim Bremsen oder Herabrollen eines Berges anliegender Leistung oder durch Leistung des Verbrennungsmotors 19.

Zur Steuerung der Komponenten des Hybridantriebsstrangs 17 ist eine Antriebssteuergerät 23 vorgesehen. Dieses steht, beispielsweise über ein Bussystem des Kraftfahrzeugs, in Kommunikationsverbindung mit einem Navigationssteuergerät 24 eines Navigationssystems 25 des Kraftfahrzeugs 16, so dass zur Zielführung verwendete Routen, insbesondere Effizienzrouten, von dem Navigationssteuergerät 24 an das Antriebssteuergerät 23 und Effizienzinformationen von dem Antriebssteuergerät 23 an das Navigationssteuergerät 24 übertragen werden können. Die Steuergeräte 23, 24 sind gemeinsam zur Durchführung des erfindungsgemäßen Verfahrens ausgebildet.

## Patentansprüche

1. Verfahren zum Betrieb eines Navigationssystems (25) eines Hybridkraftfahrzeugs (16) mit einem Verbrennungsmotor (19) und einem Elektromotor (18), der von einer zugeordneten Batterie (21) gespeist wird, wobei durch das Navigationssystem (25) eine eine maximale Nutzung des Elektromotors (18) ermöglichende Effizienzroute (7, 12) ermittelt wird, wobei bei der Ermittlung der Effizienzroute (7, 12) wenigstens eine dynamisch von einem Antriebssteuergerät (23) des Kraftfahrzeugs (16) zur Verfügung gestellte, von einer aktuellen Betriebsvorhersage, insbesondere zusätzlich vom aktuellen Betriebszustand, abhängige Effizienzinformation berücksichtigt wird,
**dadurch gekennzeichnet,**
**dass** seitens des Antriebssteuergeräts (23) eine prädiktive Betriebsstrategie für die von dem Navigationssystem (25) bereitgestellte Effizienzroute (7, 12), insbesondere in Abhängigkeit von dem aktuellen Betriebszustand, ermittelt wird, wobei wenigstens eine der wenigstens einen Effizienzinformation in Abhängigkeit von der prädiktiven Betriebsstrategie ermittelt wird.

2. Verfahren nach Anspruch 1,
**dadurch gekennzeichnet,**
**dass** wenigstens eine auf einen Ladevorgang der Batterie (21) durch den Verbrennungsmotor (19) bezogene Effizienzinformation verwendet wird.

3. Verfahren nach Anspruch 1 oder 2,
**dadurch gekennzeichnet,**
**dass** als Effizienzinformation ein bei der Ermittlung der Effizienzroute (7, 12) zu berücksichtigender, positive und negative Verbräuche des Verbrennungsmotors (19) und des Elektromotors (18) und/oder Anforderungen an die Streckenplanung beschreibende Effizienzparameter enthaltender Effizienzparametersatz verwendet wird, der seitens des Antriebssteuergeräts (23) wenigstens bei einer Änderung eines Effizienzparameters aufgrund des aktuellen Betriebszustands und/oder der aktuellen Betriebsvorhersage aktualisiert und dem Navigationssystem (25) bereitgestellt wird.

4. Verfahren nach Anspruch 3,
**dadurch gekennzeichnet,**
**dass** als Effizienzparameter die mit dem aktuellen Energieinhalt der Batterie (21) bei Nutzung nur des Elektromotors (18) zurücklegbare Strecke, aufgeschlüsselt nach Straßenklasse, und/oder die durch Laden der Batterie (21) mittels des Verbrennungsmotors (19) pro Streckeneinheit zusätzlich gewinnbare Strecke, aufgeschlüsselt nach Straßenklasse, und/oder präferierte Routenabschnitte, insbesondere bezüglich deren Länge und Eigenschaften, beschreibende Effizienzparameter verwendet werden.

5. Verfahren nach einem der vorangehenden Ansprüche,
**dadurch gekennzeichnet,**
**dass** bei einer, insbesondere auf Grundlage der aktuellen prädiktiven Betriebsstrategie, nicht vollständig elektrisch fahrbaren, bereitgestellten Effizienzroute (7, 12) durch eine Routenanalyse in Abhängigkeit von der prädiktiven Betriebsstrategie eine wenigstens einen Ansatzpunkt zur Erhöhung des allein mit dem Elektromotor (18) fahrbaren Anteils enthaltende Anpassungswunschinformation ermittelt und an das Navigationssystem (25) bereitgestellt wird.

6. Verfahren nach Anspruch 5,
**dadurch gekennzeichnet,**
**dass** der Ansatzpunkt eine Verlängerung und/oder Hinzufügung eines zum Laden der Batterie (21) aus dem Elektromotor (18) geeigneten Routenabschnitts und/oder eine Verkürzung und/oder den Wegfall eines nicht bei reinem Betrieb des Elektromotors (18) fahrbaren Routenabschnitts betrifft.

7. Verfahren nach Anspruch 5 oder 6,
**dadurch gekennzeichnet,**
**dass** das Navigationssystem (25) bei Empfang einer Anpassungswunschinformation unmittelbar eine Neuberechnung der Effizienzroute (7, 12) unter Berücksichtigung der Anpassungswunschinformation beginnt oder die Anpassungswunschinformation bei einer anderweitig ausgelösten Neuberechnung der Effizienzroute (7, 12) berücksichtigt, wobei eine unter Berücksichtigung der Anpassungswunschinformation ermittelte Effizienzroute (15) dann verwendet wird, wenn sie im Vergleich zu einer ohne Berücksichtigung der Anpassungswunschinformation ermittelten Effizienzroute (7, 12) zu einem größeren Anteil allein unter Verwendung des Elektromotors (18) gefahren werden kann.

8. Verfahren nach Anspruch 7,
**dadurch gekennzeichnet,**
**dass** die unter Berücksichtigung der Anpassungswunschinformation ermittelte, von der ohne Berücksichtigung der Anpassungswunschinformation ermittelten Effizienzroute (7, 12) abweichende Effizienzroute (15) vor Verwendung gegen wenigstens ein insbesondere ebenso beide Effizienzrouten (7, 12, 15) vergleichendes Komfortkriterium geprüft wird.

9. Hybridkraftfahrzeug (16), aufweisend einen Hybridantriebsstrang (17) mit einem Elektromotor (18) und einem Verbrennungsmotor (19), eine Batterie (21) zur Speisung des Elektromotors (18), ein Navigationssystem (25) mit einem Navigationssteuergerät (24) und ein Antriebssteuergerät (23), welche Steuergeräte (23, 24) zur Ausführung eines Verfahrens nach einem der vorangehenden Ansprüche ausgebildet sind.

## Claims

1. Method for operating a navigation system (25) of a hybrid motor vehicle (16) having a combustion engine (19) and an electric motor (18) which is fed from an associated battery (21), wherein an efficiency route (7, 12) enabling a maximum utilisation of the electric motor (18) is determined by the navigation system (25), wherein the determination of the efficiency route (7, 12) takes into consideration at least one item of efficiency information which is provided dynamically by a drive control device (23) of the motor vehicle (16) and is based on a current operating prediction, in particular based additionally on the current operating state,
**characterised in that**
a predictive operating strategy for the efficiency route (7, 12) provided by the navigation system (25), in particular based on the current operating state, is determined by the drive control device (23), wherein at least one of the at least one item of efficiency and is determined based on the predictive operating strategy.

2. Method according to claim 1,
**characterised in that**
the at least one item of the efficiency information is used which is associated with a charging process of the battery (21) by the combustion engine (19).

3. Method according to claim 1 or 2,
**characterised in that**
the efficiency route based on the efficiency parameter set containing efficiency parameters describing positive and negative consumption values of the combustion engine (19) and of the electric motor (18) and/or requirements for route planning is taken into consideration as efficiency information in the determination of the efficiency route (7, 12), and the efficiency parameter set is updated by the drive control device (23) and is provided to the navigation system (25) based on at least a change to an efficiency parameter due to the current operating state and/or the current operating prediction.

4. Method according to claim 3,
**characterised in that**
the efficiency parameters describing the route which can be traversed with the current energy content of the battery (21) when only the electric motor (18) is used, broken down according to a road class, and/or the route which can be achieved by charging the battery (21) by means of the combustion engine (19) per route unit, broken down by road class, and/or preferred route segments, in particular relating to the length and properties thereof, are used as efficiency parameters.

5. Method according to any of the preceding claims,
**characterised in that**
if an efficiency route (7, 12) is provided which, in particular based on the current predictive operating strategy, cannot be driven completely electrically, by a route analysis based on the predictive operating strategy an item of adaptation request information is determined which comprises at least one starting point for increasing the portion which can be driven only with the electric motor (18), and this information is provided to the navigation system (25).

6. The method according to claim 5,
**characterised in that**
the starting point relates to an extension and/or an addition of a route segment suitable for charging the battery (21) from the electric motor (18) and/or a shortening and/or an omission of a route segment which cannot be driven solely with operation of the electric motor (18).

7. Method according to claim 5 or 6,
**characterised in that**
when an item of adaptation request information is received, the navigation system (25) immediately begins a recalculation of the efficiency route (7, 12) taking the adaptation request information into consideration, or takes the adaptation request information into consideration if a recalculation of the efficiency route (7, 12) is initiated in some other way, wherein an efficiency route (15) determined by taking the adaptation request information into consideration is used if, by comparison with an efficiency route (7, 12) determined without taking the adaptation request information into consideration, a greater proportion of the route can be driven using only the electric motor (18).

8. Method according to claim 7,
**characterised in that**
the efficiency route (15), which is determined taking the adaptation request information into consideration and differs from the efficiency route (7, 12) determined without taking the adaptation request information into consideration, is checked before use against at least one comfort criterion, likewise comparing both efficiency routes (7, 12, 15).

9. Hybrid motor vehicle (16), comprising a hybrid drive train (17) with an electric motor (18) and a combustion engine (19), a battery (21) for feeding the electric motor (18), a navigation system (25) with a navigation control device (24) and a drive control device (23), which control devices (23, 24) are designed to carry out a method according to any one of the preceding claims.

## Revendications

1. Procédé de fonctionnement d'un système de navigation (25) d'un véhicule automobile hybride (16) muni d'un moteur à combustion (19) et d'un moteur électrique (18) qui est alimenté par une batterie (21) associée,
dans lequel un itinéraire efficace (7, 12) permettant une exploitation maximale du moteur électrique (18) est déterminé par le système de navigation (25),
dans lequel, lors de la détermination de l'itinéraire efficace (7, 12), au moins une information d'efficacité, mise à disposition de manière dynamique par un appareil de commande de propulsion (23) du véhicule automobile (16) et dépendante d'une prévision de fonctionnement actuelle, en plus en particulier d'un état de fonctionnement actuel, est prise en compte,
**caractérisé en ce que**, du côté de l'appareil de commande de propulsion (23), une stratégie de fonctionnement prédictive est déterminée pour l'itinéraire efficace (7, 12) fourni par le système de navigation (25), en particulier en fonction de l'état de fonctionnement actuel,
dans lequel au moins l'une des informations d'efficacité est déterminée en fonction de la stratégie de fonctionnement prédictive.

2. Procédé selon la revendication 1, **caractérisé en ce qu'**au moins une information d'efficacité se rapportant à une opération de recharge de la batterie (21) par le moteur à combustion (19) est utilisée.

3. Procédé selon la revendication 1 ou 2, **caractérisé en ce que**, comme information d'efficacité, on utilise un ensemble de paramètres d'efficacité devant être pris en compte lors de la détermination de l'itinéraire efficace (7, 12) et contenant des consommations positives et négatives du moteur à combustion (19) et du moteur électrique (18) et/ou des conditions devant être respectées par la planification d'itinéraire, lequel ensemble de paramètres d'efficacité est actualisé du côté de l'appareil de commande de propulsion (23) au moins lors d'un changement d'un paramètre d'efficacité sur la base de l'état de fonctionnement actuel et/ou de la prévision de fonctionnement actuel et est fourni au système de navigation (25).

4. Procédé selon la revendication 3, **caractérisé en ce que**, comme paramètre d'efficacité, on utilise des paramètres d'efficacité décrivant la route pouvant être parcourue avec le contenu énergétique actuel de la batterie (21) lors de l'utilisation exclusive du moteur électrique (18), répartie en classes de route, et/ou la route pouvant être gagnée en outre par le rechargement de la batterie (21) au moyen du moteur à combustion (19) par unité de route, répartie en classes de route, et/ou des tronçons d'itinéraire préférés, en particulier par rapport à leur longueur et caractéristiques.

5. Procédé selon l'une quelconque des revendications précédentes, **caractérisé en ce que**, dans le cas d'un itinéraire efficace (7, 12) fourni, en particulier sur la base de la stratégie de fonctionnement prédictive actuelle, et ne pouvant être parcouru entièrement électriquement, une information de souhait d'adaptation contenant au moins un point d'intervention pour augmenter la part pouvant être parcourue exclusivement avec le moteur électrique (18) est déterminée par une analyse d'itinéraire en fonction de la stratégie de fonctionnement prédictive et est fournie au système de navigation (25).

6. Procédé selon la revendication 5, **caractérisé en ce que** le point de d'intervention concerne un allongement et/ou un ajout d'un tronçon d'itinéraire convenant au rechargement de la batterie (21) à partir du moteur électrique (18) et/ou un raccourcissement et/ou l'abandon d'un tronçon d'itinéraire ne pouvant pas être parcouru lors d'un fonctionnement exclusif du moteur électrique (18).

7. Procédé selon la revendication 5 ou 6, **caractérisé en ce que** le système de navigation (25), lors de la réception d'une information de souhait d'adaptation, commence directement un nouveau calcul de l'itinéraire efficace (7, 12) en tenant compte de l'information de souhait d'adaptation ou, lors d'un nouveau calcul, déclenché d'une autre manière, de l'itinéraire efficace (7, 12) prend en compte l'information de souhait d'adaptation,
dans lequel on utilise un itinéraire efficace (15) déterminé en tenant compte de l'information de souhait d'adaptation lorsque, en comparaison d'un itinéraire efficace (7, 12) déterminé sans tenir compte de l'information de souhait d'adaptation, une plus grande partie dudit itinéraire efficace peut être parcourue exclusivement en utilisant le moteur électrique (18).

8. Procédé selon la revendication 7, **caractérisé en ce que** l'itinéraire efficace (15), déterminé en tenant compte de l'information de souhait d'adaptation et s'écartant de l'itinéraire efficace (7, 12) déterminé sans tenir compte de l'information de souhait d'adaptation, est testé avant son utilisation à la recherche d'au moins un critère de confort comparant au moins un itinéraire efficace et en particulier même les deux itinéraires efficaces (7, 12, 15).

9. Véhicule automobile hybride (16), comportant un système de propulsion hybride (17) avec un moteur électrique (18) et avec un moteur à combustion (19), une batterie (21) destinée à l'alimentation du moteur électrique (18), un système de navigation (25) avec un appareil de commande de navigation (24) et un appareil de commande de propulsion (23), lesquels appareils de commande (23, 24) sont conçus pour la mise en œuvre d'un procédé selon l'une quelconque des revendications précédentes.
